# EUROPEAN PATENT APPLICATION

(11) **EP 4 063 324 A1**
(43) Date of publication of application: **28.09.2022**
(21) Application number: 20890626.3
(22) Date of filing: 06.11.2020
(51) Int. Cl.: C01B 33/107

(54) **TRICHLOROSILANE PRODUCTION METHOD, AND PIPES**

(30) Priority: 22.11.2019 JP 2019211558
(71) Applicant: Tokuyama Corporation, Shunan-shi, Yamaguchi 745-8648 (JP)
(72) Inventor: SAKAI, Junya, Shunan-shi, Yamaguchi 745-8648 (JP); IIYAMA, Shoji, Shunan-shi, Yamaguchi 745-8648 (JP)
(74) Representative: Bittner, Thomas L.
(86) International application number: PCT/JP2020/041523
(87) International publication number: WO 2021/100497

(57) **Abstract**

Erosion, caused by deposition of aluminum chloride, of the inner surface of a side wall of a pipe is reduced. A trichlorosilane production method includes a distillation step (S3) in which a discharge liquid (10) discharged from a distillation column (4) is caused to flow through an inner space (19) of a second pipe (100) having a side wall (12) of which the inner surface (15) is covered with a ceramic layer (13), so that the discharge liquid (10) is recovered from the distillation column (4). (Fig. 3)

## Description

The present invention relates to a trichlorosilane production method, and a pipe for use in the production method.

### Background

High-purity trichlorosilane (SiHCl₃) has conventionally been used as a raw material for producing polycrystalline silicon (Si). Polycrystalline silicon is used as a raw material of a semiconductor, a wafer for photovoltaic power generation, etc. Trichlorosilane is obtained by, for example, the following process. First, metal silicon is caused to react, in the presence of a catalyst, with a raw material gas containing hydrogen chloride (HCI) to form a discharge gas containing chlorosilane compounds such as trichlorosilane and silicon tetrachloride (SiCl₄). Next, this discharge gas is cooled and condensed so that a condensate is obtained. The condensate is then distilled, and a resultant highly-purified liquid is recovered. In this way, trichlorosilane for use as a raw material for producing polycrystalline silicon is obtained.

A discharge liquid discharged as a result of the distillation of the condensate also contains chlorosilane compounds. This means that trichlorosilane for use as a raw material for producing polycrystalline silicon is also obtained by recovering this discharge liquid and causing the discharge liquid to react with metal silicon to form a discharge gas containing chlorosilane compounds.

The discharge liquid discharged as a result of the distillation of the condensate contains, besides the chlorosilane compounds, impurities coming from unreacted metal silicon powder and metal silicon. The impurities contain aluminum (Al). The aluminum in the impurities reacts with the chlorosilane compounds to form aluminum chloride (AlCl₃). This aluminum chloride and the unreacted metal silicon powder adversely affect a pipe which is laid in trichlorosilane production facilities and through which the discharge liquid flows. Specifically, aluminum chloride is deposited on the surface of the unreacted metal silicon powder and on the inner surface of a side wall of the pipe to cause an erosion of the inner surface of the side wall.

In particular, aluminum chloride is drastically deposited in a portion where the inner surface, in contact with the discharge liquid, of the side wall has a temperature that has decreased to not more than 80°C. Erosion is significantly caused in such a portion. Further, aluminum chloride is more drastically deposited in a portion where the inner surface of the side wall has a temperature that has decreased to not more than 70°C. Erosion is more significantly caused in such a portion. For this reason, with conventional trichlorosilane production methods, the life of a pipe through which the discharge liquid flows is shortened due to the deposition of aluminum chloride.

A technique for preventing the above-described shortening of a pipe life is disclosed in, for example, WO 2019/098343. WO 2019/098343 discloses, in relation to a pipe for use in the step of cooling a discharge gas containing trichlorosilane, a technique of increasing the temperature of a surface, in contact with the discharge gas, of a side wall of the pipe to a temperature equal to or more than a predetermined temperature. This technique is to cause a fluid to flow through a space provided inside the side wall of the pipe through which a discharge gas discharged from a fluidized-bed reactor flows, in order to cool the discharge gas while keeping a surface, in contact with the discharge gas, of the side wall at a temperature of not less than 110°C.

### Summary

### Technical Problem

The technique disclosed in WO 2019/098343 is intended to reduce deposition and solidification of aluminum chloride in the pipe through which the discharge gas flows. WO 2019/098343, however does not disclose a technique for reducing deposition of aluminum chloride in a pipe through which a discharge liquid is discharged due to distillation of a condensate. Accordingly, using the technique disclosed in WO 2019/098343 is not necessarily sufficient in terms of reducing the deposition of aluminum chloride in the pipe through which a discharge liquid flows.

An aspect of the present invention has been made in view of the above problem, and has an object of reducing erosion of the inner surface of a side wall of a pipe, the erosion being caused by deposition of aluminum chloride on the inner surface, the deposition being caused when a discharge liquid containing chlorosilane compounds, etc. flows through the pipe.

### Solution to Problem

In order to solve the above problem, a trichlorosilane production method in accordance with an aspect of the present invention includes a distillation step of distilling, by using a distillation device, a first liquid containing trichlorosilane formed through a reaction between metal silicon containing aluminum in a concentration of not less than 0.10 mass% and a raw material gas containing a chloride, the trichlorosilane production method including recovering a second liquid containing the trichlorosilane from the distillation device, the second liquid containing aluminum chloride in a molar concentration higher than a molar concentration of the aluminum contained in the metal silicon, the distillation step including recovering the second liquid from the distillation device by causing the second liquid discharged from the distillation device to flow through an inside of a pipe having a side wall of which an inner surface is covered with a ceramic layer.

A pipe in accordance with an aspect of the present invention is for use in flow of a second liquid containing trichlorosilane, the second liquid having been discharged from a distillation device for distilling a first liquid containing the trichlorosilane formed through a reaction between metal silicon containing aluminum in a concentration of not less than 0.10 mass% and a raw material gas containing a chloride, the pipe being for use under a condition where the second liquid recovered from the distillation device contains aluminum chloride in a molar concentration higher than a molar concentration of the aluminum contained in the metal silicon, the pipe having a side wall of which an inner surface is covered with a ceramic layer.

### Advantageous Effects of Invention

An aspect of the present invention makes it possible to reduce the occurrence of erosion, caused by deposition of aluminum chloride originally contained in the second liquid, of the inner surface of the side wall of the pipe.

### Brief Description of Drawings

- Fig. 1: is a flowchart illustrating an example of a trichlorosilane production method in accordance with an embodiment of the present invention.
- Fig. 2: is a block diagram illustrating an example of trichlorosilane production facilities in accordance with an embodiment of the present invention.
- Fig. 3: is a cross-sectional view schematically illustrating a structure of a straight barrel part of a second pipe in accordance with an embodiment of the present invention.
- Fig. 4: is a cross-sectional view schematically illustrating a structure of an elbow part of the second pipe.
- Fig. 5: is a cross-sectional view schematically illustrating a straight barrel part of a second pipe in accordance with Variation 1 of an embodiment of the present invention.
- Fig. 6: is a cross-sectional view schematically illustrating a straight barrel part of a second pipe in accordance with Variation 2 of an embodiment of the present invention.
- Fig. 7: is a cross-sectional view schematically illustrating a straight barrel part of a second pipe in accordance with Variation 3 of an embodiment of the present invention.
- Fig. 8: is a cross-sectional view schematically illustrating a straight barrel part of a second pipe in accordance with an Example of the present invention.

### Description of Embodiments

### [Trichlorosilane production method]

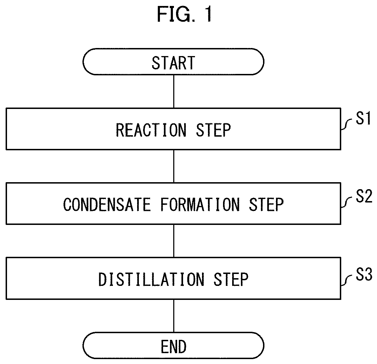

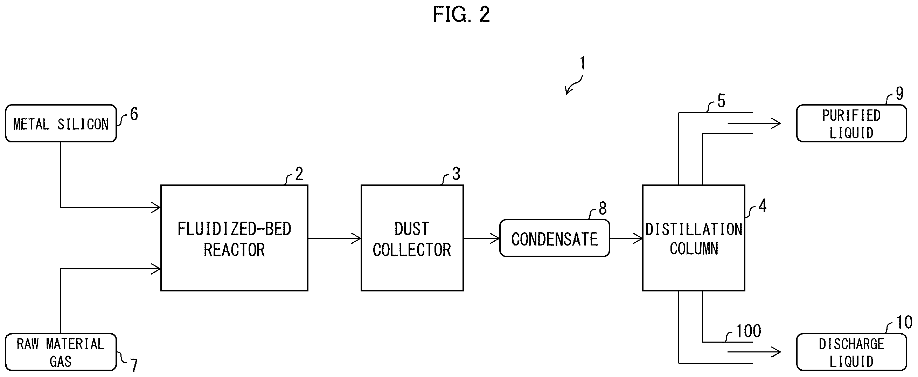

As illustrated in Fig. 1, a trichlorosilane production method in accordance with an embodiment of the present invention includes a reaction step (S1), a condensate formation step (S2), and a distillation step (S3). Further, as illustrated in Fig. 2, trichlorosilane production facilities 1 in accordance with an embodiment of the present invention includes a fluidized-bed reactor 2, a dust collector 3, a distillation column 4, a first pipe 5, and a second pipe 100. It should be noted that how the metal silicon 6 and the raw material gas 7 (both of which will be described later) flow to reach the fluidized-bed reactor 2 is described in, for example, International Publication No. 2019/098344, and the description is employed when needed and omitted herein.

### <Reaction step>

First, the metal silicon 6 and the raw material gas 7 are caused to react together to form trichlorosilane (not illustrated), in the reaction step (S1) illustrated in Fig. 1. Examples of the metal silicon 6 for use in forming trichlorosilane include a solid substance containing element silicon in a metallic state, such as metallurgical grade silicon, ferrosilicon, or polysilicon (Si). Known solid materials of such kinds are used without any limitation.

The metal silicon 6 contains impurities such as aluminum and an iron compound. The metal silicon 6 contains aluminum in a concentration of not less than 0.10 mass%, and more suitably of not less than 0.15 mass% and not more than 0.50 mass%. The metal silicon 6 may contain, as an impurity, any component besides aluminum, and may contain such a component in any amount without particular limitation. Further, the metal silicon 6 may contain, as an impurity, nothing except aluminum. The metal silicon 6 is typically used in the form of fine powder having an average particle diameter of approximately not less than 150 µm and not more than 350 µm.

In the present embodiment, a gas containing hydrogen chloride (hereinafter, referred to as a hydrogen chloride gas) is used as the raw material gas 7 for use in forming trichlorosilane. Hydrogen chloride gas is an example of a first raw material gas in accordance with the present invention, and hydrogen chloride is an example of a chloride in accordance with the present invention. As the raw material gas 7, any type of hydrogen chloride gas can be used without limitation. A variety of industrially available hydrogen chloride gases can be used.

As illustrated in Fig. 2, trichlorosilane is formed by using the fluidized-bed reactor 2. The fluidized-bed reactor 2 is a reactor in which the metal silicon 6 and the raw material gas 7 react together to form trichlorosilane. The fluidized-bed reactor 2 is an example of a reactor in accordance with the present invention. Any known reactor can be used as the fluidized-bed reactor 2 without limitation. The fluidized-bed reactor 2 is capable of continuously supplying the metal silicon 6 and the raw material gas 7. Using the fluidized-bed reactor 2 therefore enables continuous production of trichlorosilane. A reactor for use in forming trichlorosilane is not limited to the fluidized-bed reactor 2. For example, any known reactors which are not of fluidized-bed type can be used without limitation.

The metal silicon 6 and the raw material gas 7 may be supplied at any rate without limitation, provided that it is possible to supply the metal silicon 6 and the raw material gas 7 at a flow rate that enables formation of a fluidized bed. Further, a catalyst is preferably used in a reaction between the metal silicon 6 and the raw material gas 7, from the perspective of efficient production of trichlorosilane as well as an increase in a rate at which the metal silicon 6 and the raw material gas 7 react together. Examples of the catalyst for use in this reaction include a copper-based catalyst such as copper powder, copper chloride, or copper silicide.

The metal silicon 6 and the raw material gas 7 are caused to react together at a reaction temperature that is determined as appropriate in consideration of the material and the capability of the fluidized-bed reactor 2, the catalyst, etc. The reaction temperature is set so as to be in a range typically of not less than 200°C and not more than 500°C, and preferably of not less than 250°C and not more than 450°C.

In the reaction step (S1), main reactions that occur in the fluidized-bed reactor 2 are expressed by Equation (1) and Equation (2) below.

Si + 3HCI → SiHCl₃+ H₂... Equation (1)

Si + 4HCI → SiCl₄ + 2H₂ ... Equation (2)

Trichlorosilane formed in the fluidized-bed reactor 2 is discharged as a discharge gas (not illustrated). In addition to trichlorosilane, this discharge gas contains hydrogen, by-product silicon tetrachloride and the metal silicon 6 that remains unreacted, other chlorosilane compounds, and aluminum chloride. As used herein, a chlorosilane compound means a compound containing element chlorine and element silicon. Examples of the chlorosilane compound include dichlorosilane (SiH₂Cl₂), pentachlorodisilane (Si₂HCl₅), and hexachlorodisilane (Si₂Cl₆), in addition to trichlorosilane and silicon tetrachloride.

A method of forming trichlorosilane in the reaction step (S1) in the trichlorosilane production method in accordance with the present embodiment is not limited to a method of causing the metal silicon 6 to react with a hydrogen chloride gas for use as the raw material gas 7. The method of forming trichlorosilane that may be employed is, for example, a method of converting, to trichlorosilane, silicon tetrachloride that is a by-product of polysilicon deposition step (STC reduction reaction) to reuse the trichlorosilane. In a case where this method is employed, the silicon tetrachloride is an example of the chloride in accordance with the present invention.

Specifically, a gas containing silicon tetrachloride, formed in the above-described polysilicon deposition step, and hydrogen is used as a raw material gas. The raw material gas and the metal silicon 6 are then caused to react together in the fluidized-bed reactor 2 so that the silicon tetrachloride is converted to trichlorosilane. The gas containing silicon tetrachloride and hydrogen is an example of a second raw material gas in accordance with the present invention. The conversion to trichlorosilane is expressed by Equation (3) below.

Si + 3SiCl₄+ 2H₂ → 4SiHCl₃ ... Equation (3)

Further, in the reaction step (S1), the method of converting silicon tetrachloride to trichlorosilane to reuse the trichlorosilane may be used in combination with the method of causing the metal silicon 6 and the raw material gas 7 to react together.

### <Condensate formation step>

Next, in the condensate formation step (S2) illustrated in Fig. 1, a discharge gas discharged from the fluidized-bed reactor 2 is subjected to various kinds of treatment so that a condensate 8 (see Fig. 2) containing trichlorosilane is formed. The condensate 8 is an example of a first liquid in accordance with the present invention.

Specifically, first, the discharge gas discharged from the fluidized-bed reactor 2 is caused to pass through the dust collector 3 illustrated in Fig. 2 so that a solid substance in the discharge gas is removed. The solid substance in the discharge gas is, for example, the metal silicon 6 that has not reacted in the reaction step (S1). Examples of the dust collector 3 include a filter and a centrifugal dust collector. In a case of using a centrifugal dust collector, it is preferable to use, for example, a cyclone powder separator. This is because a cyclone powder separator is capable of removing a particle such as a solid substance even when the particle is in a minute form, easy to install and maintenance when compared to other centrifugal dust collectors, and usable under high pressure and high temperature.

Next, the discharge gas obtained from the dust collector 3 is cooled. This cooling is carried out so that, after the discharge gas is cleaned, trichlorosilane is condensed and isolated to form the condensate 8. A method for cooling the discharge gas is not limited to any particular method, provided that the method enables various chlorosilane compounds to cool to temperatures lower than or equal to the temperature at which the chlorosilane compounds are condensed.

### <Distillation step>

### (Outline of distillation step)

Next, in the distillation step (S3) illustrated in Fig. 1, the condensate 8 illustrated in Fig. 2 and having been formed in the condensate formation step (S2) is distilled in the distillation column 4. The distillation column 4 is an example of a distillation device in accordance with the present invention. The distillation device for use in distilling the condensate 8 is not limited to the distillation column 4. A variety of known distillation devices can be used without any limitation.

The condensate 8 contains, besides trichlorosilane, impurities including the metal silicon 6 that could not have been removed in the condensate formation step (S2) and aluminum chloride formed through a reaction between aluminum in the metal silicon 6 and the chlorosilane compounds. Therefore, the condensate 8 is distilled for isolating and removing the impurities from the condensate 8, so that a purified liquid 9 that is obtained by purifying the condensate 8 and that contains trichlorosilane is recovered. From the purified liquid 9 recovered, trichlorosilane for use as a raw material for producing polycrystalline silicon is obtained.

In the distillation step (S3), specifically, the condensate 8 is directly heated at the bottom of the distillation column 4, so that chlorosilane compounds such as trichlorosilane and silicon tetrachloride are evaporated and discharged through the top of the distillation column 4. Alternatively, for example, a portion of the condensate 8 is blown out of the distillation column 4 to be heated by a reboiler and is then put back in the distillation column 4, so that the chlorosilane compounds are evaporated and discharged through the top of the distillation column 4. The condensate 8 is distilled at a temperature typically of not less than 60°C, and more suitably of not less than 70°C and not more than 90°C. The chlorosilane compounds having been discharged through the top of the distillation column 4 is cooled while passing through the inner space of the first pipe 5 that is in communication with the top of the distillation column 4, and is finally recovered in the form of the purified liquid 9.

Further, through the bottom of the distillation column 4, a discharge liquid 10 is discharged as a result of distillation of the condensate 8, as illustrated in Fig. 2. The discharge liquid 10 contains, besides trichlorosilane and other chlorosilane compounds, impurities coming from the metal silicon 6 such as aluminum chloride, ferric chloride (FeCl₃), calcium chloride (CaCl₂), and titanium chloride (TiCl₄), and unreacted metal silicon powder. The unreacted metal silicon powder is contained in a concentration typically of not more than several tens of ppmwt. Further, the unreacted metal silicon powder has an average particle diameter of not more than 1 µm. The discharge liquid 10 is an example of a second liquid in accordance with the present invention.

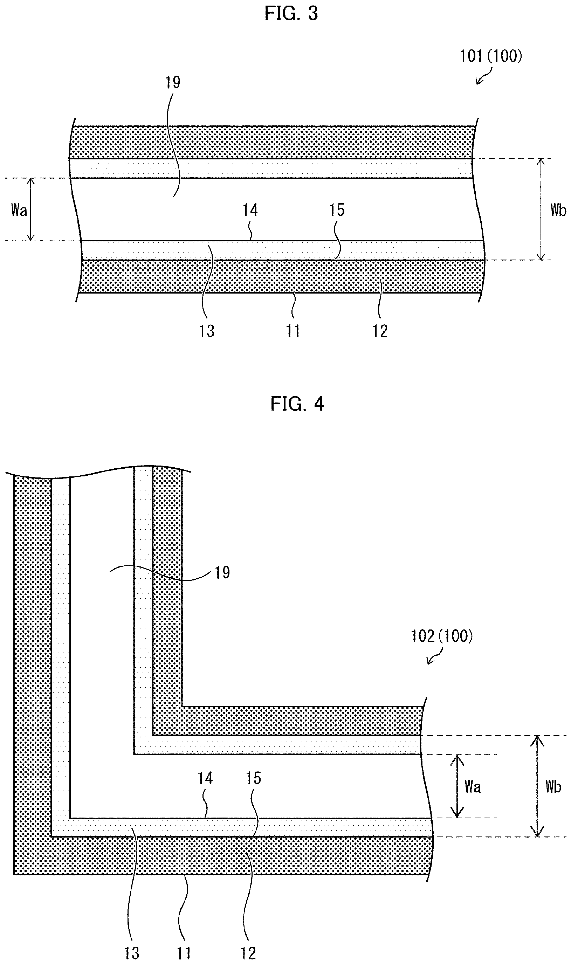

The bottom of the distillation column 4 is in communication with the second pipe 100, which is an example of the pipe in accordance with the present invention. The discharge liquid 10 is recovered by causing the discharge liquid 10 having been discharged through the bottom of the distillation column 4 to flow through an inner space 19 (see, for example, Fig. 3) of the second pipe 100. Alternatively, in a case where a portion of the condensate 8 is taken out and heated with use of a reboiler, the portion of the condensate 8 may be delivered to the reboiler by using a branch (not illustrated) of the second pipe 100 that branches off midway through the second pipe 100. The structure of the second pipe 100 will be described later in detail.

The discharge liquid 10 having been recovered contains silicon tetrachloride, which is recovered by, for example, in turn distilling the discharge liquid 10. The silicon tetrachloride that has been recovered is stored in, for example, a tank (not illustrated), and reused for producing trichlorosilane. Specifically, silicon tetrachloride having been recovered is converted to trichlorosilane by performing an STC reduction reaction in the fluidized-bed reactor 2 with the use of a gas that contains the silicon tetrachloride and hydrogen and the metal silicon 6. The silicon tetrachloride recovered is an example of a chloride in accordance with the present invention, and the gas containing the silicon tetrachloride recovered and hydrogen is an example of a second raw material gas in accordance with the present invention.

The silicon tetrachloride recovered may be put to industrial applications instead of reusing for producing trichlorosilane. Alternatively, part of the silicon tetrachloride having been recovered may be reused for producing trichlorosilane, and the remaining part may be put to industrial applications. Furthermore, silicon tetrachloride does not need to be recovered from the discharge liquid 10.

### (Structure of second pipe)

The trichlorosilane production method in accordance with the present embodiment is carried out under a condition where the metal silicon 6 contains aluminum in a concentration of not less than 0.10 mass% before reacting with the raw material gas 7 in the fluidized-bed reactor 2. In addition to this condition, the above-described production method is carried out under a condition where the discharge liquid 10 recovered through the second pipe 100 contains aluminum chloride in a concentration higher than the above-described concentration of the aluminum in terms of a molar concentration.

As used herein, various molar concentrations are defined as follows: First, the molar concentration of aluminum contained in the metal silicon 6 refers to a ratio of the number of moles (the number of atoms) of aluminum contained per unit mass of the metal silicon 6 to a sum of the numbers of moles (a sum of the numbers of atoms) of the respective metals, including silicon, contained per unit mass of the metal silicon 6. Second, the molar concentration of aluminum chloride contained in the discharge liquid 10 is a ratio of the number of moles (the number of molecules) of aluminum chloride contained per unit mass of the discharge liquid 10 to a sum of the numbers of moles (a sum of the numbers of molecules) of the respective metal compounds contained per unit mass of the discharge liquid 10. Hereinafter, a molar concentration is expressed as "mol%".

The sum of the numbers of moles of the respective metals contained in the metal silicon 6 is determined through dissolution of a predetermined amount of the metal silicon 6 in a mixture of nitric acid and hydrofluoric acid. Specifically, when the metal silicon 6 is dissolved in a mixture of nitric acid and hydrofluoric acid, silicon contained in the metal silicon 6 is converted to silicon tetrafluoride (SiF₄) to turn to a volatile component. When a solution obtained by the dissolution is heated at 120°C to evaporate, residues after the evaporation contain the other metal components that are in the form of oxides. Next, the evaporation residues are dissolved in nitric acid, and measured by means of an inductively-coupled plasma mass spectrometry (ICP-MS). This enables determination of the numbers of moles of the respective metals other than silicon. The remaining number of moles is used as the number of moles of silicon. The numbers of moles of the respective metals other than silicon and the number of moles of silicon are then added together so that the sum of the numbers of moles of the respective metals contained in the metal silicon 6 is determined.

Further, the sum of the numbers of moles of the respective metal compounds contained in the discharge liquid 10 can be determined by a method below. First, the numbers of moles of various chlorosilane compounds are determined by measuring the discharge liquid 10 by means of a gas chromatogram having a thermal conductivity detector (TCD). Next, the discharge liquid 10 is heated at 70°C so that a volatile component in the discharge liquid 10 evaporates. After that, residues after the evaporation are dissolved in nitric acid, and the sum of the numbers of moles of the respective metal compounds contained in the discharge liquid 10 is then determined by means of an ICP-MS.

In relation to the calculation of the sums of the numbers of moles described above, metals to be measured other than silicon are aluminum, iron, calcium, titanium, phosphorus, boron, copper, chromium, manganese, magnesium, sodium, and lithium.

When an inner surface 15 (see, for example, Fig. 3) of a side wall 12 is exposed to an inner space 19 under the above-described conditions, flow of the discharge liquid 10 through the inner space 19 in the distillation step (S3) makes aluminum chloride in the discharge liquid 10 likely to be deposited on the surface of the unreacted metal silicon powder and on the inner surface 15 of the side wall 12. This aluminum chloride causes erosion of the inner surface 15 of the side wall 12.

To reduce the erosion, the second pipe 100 in accordance with the present embodiment has a structure in which the inner surface 15 of the side wall 12 is covered with a ceramic layer 13 in at least a part of the second pipe 100 as illustrated in Figs. 3 and 4. In other words, the second pipe 100 can be a pipe for use under a condition where the mol% concentration of aluminum chloride in the discharge liquid 10 recovered from the distillation column 4 is higher than the mol% concentration of aluminum that the metal silicon 6 has before reacting with the raw material gas 7 in the fluidized-bed reactor 2. The second pipe 100 thus has a structure that enables a reduction in erosion in the part covered by the ceramic layer 13 even when aluminum chloride is more or less deposited on the surface of the unreacted metal silicon powder and the inner surface 15 of the side wall 12.

It should be noted that when the second pipe 100 is used under a condition where the mol% concentration of aluminum chloride in the discharge liquid 10 is condensed so as to be not less than twice and not more than ten times the mol% concentration of aluminum that the metal silicon 6 has before reacting with the raw material gas 7, the significance of the second pipe 100 is made clear. In particular, when the second pipe 100 is used under a condition where the mol% concentration of aluminum chloride in the discharge liquid 10 is condensed so as to be not less than three times and not more than eight times the mol% concentration of aluminum that the metal silicon 6 has before reacting with the raw material gas 7, the significance of the second pipe 100 is made clearer. This also applies to a case where the absolute value of the mol% concentration of aluminum chloride contained in the discharge liquid 10 is not less than 0.3 mol%, and particularly not less than 0.4 mol% and not more than 1.2 mol%.

The reason for this is explained as follows: When a conventional pipe having a side wall of which the inner surface is not covered with the ceramic layer 13 is used under each of the above-described conditions, aluminum chloride will be drastically deposited on the surface of the unreacted metal silicon powder and on the inner surface of the side wall. This causes erosion to significantly occur on the inner surface of the side wall to a degree that, in some cases, creates difficulty in continuous use of the pipe. In contrast, when the second pipe 100 is used under each of the above-described conditions, the presence of the ceramic layer 13 reduces erosion even when aluminum chloride is more or less deposited on the surface of the unreacted metal silicon powder and on the inner surface 15 of the side wall 12. It is therefore possible to reduce erosion of the inner surface 15 of the side wall 12 to a level that at least maintains continuous use of the second pipe 100. This makes obvious an effect of reducing erosion of the second pipe 100.

Alternatively, the coverage with the ceramic layer 13 may be made throughout the second pipe 100, from the point of connection with the bottom of the distillation column 4 to the point of end of transfer of the discharge liquid 10 (hereinafter, referred to as "a main body of the second pipe 100"), or may be partially made in the second pipe 100. Further, in a case where the second pipe 100 has a structure in which the second pipe 100 branches midway through a path thereof to have a cyclic path (not illustrated) that leads back to the distillation column 4 through a reboiler, the coverage with the ceramic layer 13 may be made throughout the main body of the second pipe 100 and throughout the cyclic path. Alternatively, the coverage with the ceramic layer 13 may be partially made in the main body of the second pipe 100 and the cyclic path.

The second pipe 100 has a part which is away from the bottom of the distillation column 4 to a certain degree and in which the surface of the unreacted metal silicon powder and the inner surface 15 of the side wall 12 are likely to have a temperature of not more than 80°C and aluminum chloride is therefore likely to be deposited drastically. Further, in the above-described part, the temperature of the inner surface 15 of the side wall 12 can be not more than 70°C depending on, for example, an environment surrounding the second pipe 100. This causes aluminum chloride to be drastically deposited. It is therefore preferable to make coverage with the ceramic layer 13 in the part of the second pipe 100 that is away from the bottom of the distillation column 4 to a certain degree.

The second pipe 100 includes a metal pipe 11 and the ceramic layer 13, as illustrated in Figs. 3 and 4. The metal pipe 11 is, for example, a pipe made of a known metal such as stainless used steel (SUS) or iron, and formed by the side wall 12 that is cylindrical. The ceramic layer 13 that covers the inner surface 15 of the side wall 12 is therefore cylindrical.

The inner space 19 of the second pipe 100, which is a cylindrical space, is formed so as to be surrounded by a contacting surface 14 of the ceramic layer 13. The inner space 19 is an example of the inside of the pipe in accordance with the present invention. The discharge liquid 10 discharged through the top of the distillation column 4 flows through the inner space 19. The contacting surface 14 is the surface of contact between the ceramic layer 13 and the discharge liquid 10 flowing through the inner space 19.

Fig. 3 illustrates a part of a straight barrel part 101 of the second pipe 100, and Fig. 4 illustrates an elbow part 102 of the second pipe 100. The straight barrel part 101 refers to a part of the second pipe 100 that has no bending portion, and the elbow part 102 refers to a part of the second pipe 100 that is a bending portion. The straight barrel part 101 and the elbow part 102 are connected together so that the second pipe 100 is formed. Note that the second pipe 100 and the inner space 19 each can have a shape and a size that are not limited to the example of the present embodiment and that can be arbitrarily changed in design.

Since the inner surface 15 of the side wall 12 is covered with the ceramic layer 13 as described above, aluminum chloride in the discharge liquid 10 flowing through the inner space 19 of the second pipe 100 is deposited, mostly on the surface of the unreacted metal silicon powder and on the contacting surface 14 of the ceramic layer 13. In other words, the above aluminum chloride is deposited little on the inner surface 15 of the side wall 12. This enables a reduction in erosion, caused by the deposition of aluminum chloride, of the inner surface 15 of the side wall 12.

A ceramic material that forms the ceramic layer 13 has resistance to adhesion of aluminum chloride. Accordingly, even when aluminum chloride in the discharge liquid 10 flowing through the inner space 19 of the second pipe 100 is deposited on the contacting surface 14 of the ceramic layer 13, the aluminum chloride does not adhere much to the contacting surface 14.

A ceramic material also has excellent resistance to abrasion because of its high hardness. Accordingly, even when aluminum chloride is deposited on and adheres to the contacting surface 14, the contacting surface 14 does not wear much. These respects indicate that erosion is unlikely to occur on the contacting surface 14 of the ceramic layer 13. In consideration of the above, covering the inner surface 15 of the side wall 12 with the ceramic layer 13 lengthens the life of the second pipe 100.

Examples of the ceramic material that forms the ceramic layer 13 include commonly-used metal ceramic materials including alumina, silica, zirconium oxide, zirconium silicate, and chromic oxide. In particular, alumina is preferably used as the material for forming the ceramic layer 13. In a case where alumina is used as the material for forming the ceramic layer 13, even when deposition of aluminum chloride causes erosion of the contacting surface 14 of the ceramic layer 13, a substance that is mixed into the discharge liquid 10 flowing through the inner space 19 of the second pipe 100 is substantially limited to aluminum. This advantageously prevents substances other than aluminum from being mixed into the discharge liquid 10 flowing through the inner space 19 of the second pipe 100.

A process for forming the ceramic layer 13 on the inner surface 15 of the side wall 12 is not limited to any particular process, and known processes including bonding, a CVD method, and thermal spraying can be used. The ceramic layer 13 has a thickness preferably of not less than 1 mm and less than 5 mm, and more preferably of not less than 2 mm and not more than 4 mm.

In a case where the thickness of the ceramic layer 13 is less than 1 mm, problems will be likely to occur. For example, the extremely small thicknesses of the ceramic layer 13 to be formed make the formation of the ceramic layer 13 difficult, and therefore cause unevenness of formation after the completion of the formation. In a case where the thickness of the ceramic layer 13 is not less than 5 mm, it is necessary to significantly increase an inner diameter Wb of the metal pipe 11 to make an inner diameter Wa of the second pipe 100 substantially equal to the inner diameter of a conventional metal pipe. This results in the second pipe 100 that is larger than required, and therefore increases costs. In consideration of the above, it is possible to reduce the unevenness of formation and the increase in costs by designing the ceramic layer 13 to have a thickness of not less than 1 mm and less than 5 mm. The unevenness of formation and the increase in costs can be reduced most for a thickness of the ceramic layer 13 of 3 mm.

### [Variations]

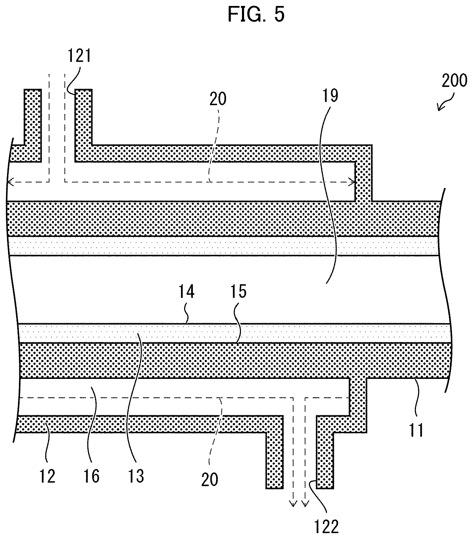

The following description will discuss variations of the second pipe 100 in accordance with an embodiment of the present invention, with reference to Figs. 5 to 7. For the convenience of description, a member having the same function as the member already described in the embodiment above is assigned the same reference sign, and the description of the member is omitted.

### <Variation 1>

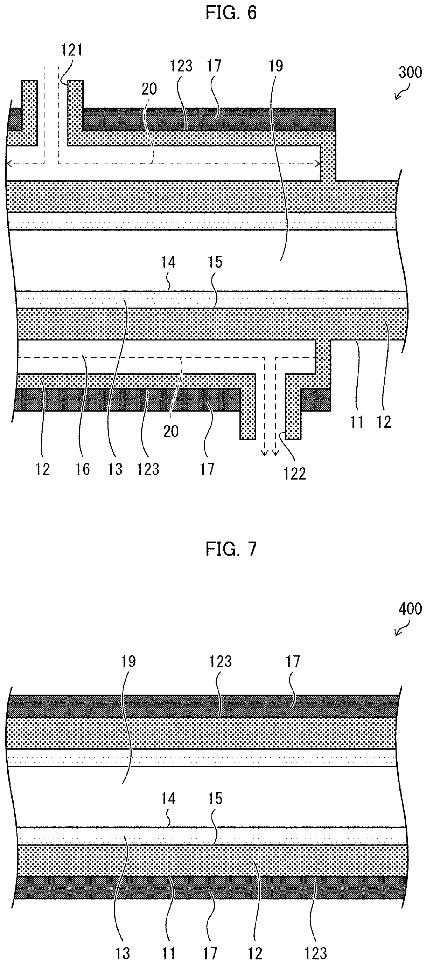

One variation of the second pipe 100 that can be conceived of in the first place is a second pipe 200. As illustrated in Fig. 5, the second pipe 200 has a space 16 formed inside a side wall 12. For the convenience of description, only a straight barrel part of the second pipe 200 is illustrated in Fig. 5. Illustrating only a straight barrel part applies to Figs. 6 to 8.

The space 16 is a space for flow of air 20 through the inside of the side wall 12 of the second pipe 200. The air 20 is an example of a heat medium in accordance with the present invention. The side wall 12 has a first opening 121 for leading the air 20 to the space 16. The first opening 121 and the space 16 are in communication with each other. The side wall 12 also has a second opening 122 for discharging the air 20 out of the second pipe 200 through the space 16. The second opening 122 and the space 16 are in communication with each other.

The air 20 has a temperature of not less than 120°C and not more than 150°C and more preferably of not less than 130°C and not more than 140°C. The flow of the air 20 through the space 16 causes the contacting surface 14 of the ceramic layer 13 to have a temperature of not less than 100°C and more preferably of not less than 110°C and not more than 120°C. Whether the temperature of the contacting surface 14 is not less than 100°C is confirmed through, for example, temperature measurement by using a K thermocouple or the like installed on the contacting surface 14. This temperature confirmation method is applied, in the same manner, to a second pipe 300, which will be described later.

Setting the temperature of the contacting surface 14 to not less than 100°C as described above enables a reduction in the amount of deposition of aluminum chloride, originally contained in the discharge liquid 10, on the surface of the unreacted metal silicon powder and on the contacting surface 14. This makes it possible to slow the progression of erosion of the contacting surface 14. Unnecessarily increasing the temperature of the contacting surface 14 requires much energy for heating. Accordingly, the temperature of the contacting surface 14 is preferably not more than 120°C.

Setting the temperature of the contacting surface 14 to not less than 100°C makes it possible to lower the viscosity of aluminum chloride in the discharge liquid 10 flowing through the inner space 19 of the second pipe 200. The lowered viscosity leads to a reduction in friction force that acts on the contacting surface 14 when aluminum chloride in the discharge liquid 10 comes into contact with the contacting surface 14. This enables a reduction in erosion of the contacting surface 14.

The heat medium to flow through the space 16 of the side wall 12 is not limited to the air 20. For example, oil or high-temperature water may flow through the space 16 instead of the air 20. In a case where high-temperature water flows through the space 16, it is possible to make the total length of the second pipe 200 shorter than in a case where the air 20 flows. This makes it possible to make the trichlorosilane production facilities 1 (see Fig. 2) more compact.

### <Variation 2>

Another conceivable variation of the second pipe 100 is a second pipe 300 in which a space 16 is formed inside a side wall 12 and in which an outer surface 123 of the side wall 12 is covered with a heat-retaining layer 17, as illustrated in Fig. 6. The heat-retaining layer 17 keeps a contacting surface 14 of a ceramic layer 13 at a temperature of not less than 100°C. A type, material, etc. of the heat-retaining layer 17 are not limited provided that the type, material, etc. are capable of keeping the contacting surface 14 at a temperature of not less than 100°C. It is however preferable to use wool made of a ceramic material. In addition, among other kinds of wool that are made of ceramic materials, rock wool is particularly preferable. Heat-retaining layers made of such materials have a thickness typically of not less than 20 mm and not more than 40 mm and more preferably of not less than 25 mm and not more than 35 mm. Covering the outer surface 123 of the side wall 12 with the heat-retaining layer 17 as described above makes it possible to keep, at a reduced level, the amount of deposition of aluminum chloride, originally contained in the discharge liquid 10, on the contacting surface 14, while the discharge liquid 10 flows through the inner space 19 of the second pipe 300. It is also possible to keep the viscosity of aluminum chloride in the discharge liquid 10 at a lower level.

In addition to the covering of the outer surface 123 of the side wall 12 with the heat-retaining layer 17, the flow of the air 20 through the space 16 of the side wall 12 makes it possible to further make sure that the contacting surface 14 is kept at a temperature of not less than 100°C. It is therefore possible to further make sure that the amount of aluminum chloride in the discharge liquid 10 is kept at a reduced level and that the viscosity is kept at a lower level. This enables an effective reduction in erosion of the inner surface 15 of the side wall 12.

It should be noted that, even in a case where the space 16 is not formed inside the side wall 12 as in a second pipe 400 illustrated in Fig. 7, only covering the outer surface 123 of the side wall 12 with the heat-retaining layer 17 enables the keeping of the amount of aluminum chloride in the discharge liquid 10 at a reduced level and the keeping of the viscosity at a lower level.

Aspects of the present invention can also be expressed as follows:
A trichlorosilane production method in accordance with an aspect of the present invention includes a distillation step of distilling, by using a distillation device, a first liquid containing trichlorosilane formed through a reaction between metal silicon containing aluminum in a concentration of not less than 0.10 mass% and a raw material gas containing a chloride, the trichlorosilane production method including recovering a second liquid containing the trichlorosilane from the distillation device, the second liquid containing aluminum chloride in a molar concentration higher than a molar concentration of the aluminum contained in the metal silicon, the distillation step including recovering the second liquid from the distillation device by causing the second liquid discharged from the distillation device to flow through an inside of a pipe having a side wall of which an inner surface is covered with a ceramic layer.

With the above configuration, in which the inner surface of the side wall of the pipe is covered with the ceramic layer, even when the second liquid containing aluminum chloride in an amount that could cause a problematic erosion flows through the inside of the pipe, aluminum chloride is less likely to be deposited on the surface of the unreacted metal silicon powder and on the inner surface of the side wall. This enables a reduction in erosion, caused by the deposition of aluminum chloride originally contained in the second liquid, of the inner surface of the side wall.

According to the trichlorosilane production method in accordance with an aspect of the present invention, the ceramic layer has a contacting surface that comes into contact with the second liquid and that may be set to a temperature of not less than 100°C. With the above configuration, in which the temperature of the contacting surface of the ceramic layer is set to a temperature of not less than 100°C, it is possible to reduce the amount of aluminum chloride, originally contained in the second liquid, deposited on the surface of the unreacted metal silicon powder and on the contacting surface while the second liquid flows through the inside of the pipe. This leads to a reduction in the amount of a substance responsible for erosion of the contacting surface and thus slows the progression of the erosion of the contacting surface.

It is also possible to lower the viscosity of aluminum chloride in the second liquid flowing through the inside of the pipe. This leads to a reduction in friction force that acts on the contacting surface when aluminum chloride in the second liquid flowing through the inside of the pipe comes into contact with the contacting surface. The above leads to a reduction in erosion of the contacting surface of the ceramic layer. It is therefore possible to further reduce the erosion, caused by the deposition of aluminum chloride originally contained in the second liquid, of the inner surface of the side wall.

According to the trichlorosilane production method in accordance with an aspect of the present invention, a space for a heat medium to flow through is formed inside the side wall, and the contacting surface may have a temperature that is set to be not less than 100°C by causing the heat medium to flow through the space.

With the above configuration, it is possible to further reduce the erosion, caused by the deposition of aluminum chloride originally contained in the second liquid, of the inner surface of the side wall by causing the heat medium to flow through the space formed inside the side wall so that the temperature of the contacting surface is set to not less than 100°C.

According to the trichlorosilane production method in accordance with as aspect of the present invention, the side wall has an outer surface that may be covered with a heat-retaining layer for keeping, at a temperature of not less than 100°C, the contacting surface at which the ceramic layer comes into contact with the second liquid.

With the above configuration, in which the outer surface of the side wall is covered with the heat-retaining layer, it is possible to keep the contacting surface at a temperature of not less than 100°C while the second liquid flows through the inside of the pipe. This makes it possible to both keep, at a reduced level, the amount of deposition of aluminum chloride, originally contained in the second liquid, on the surface of the unreacted metal silicon powder and on the contacting surface and keep the viscosity of aluminum chloride of the second liquid at a lower level, while the second liquid flows through the inside of the pipe. This enables an effective reduction in erosion, caused by the deposition of aluminum chloride originally contained in the second liquid, of the inner surface of the side wall.

According to the trichlorosilane production method in accordance with an aspect of the present invention, the ceramic layer may contain alumina. With the above configuration, in which the ceramic layer contains alumina, even when erosion occurs on the contacting surface of the ceramic layer due to the deposition of aluminum chloride, substances generated by the wearing away of the ceramic layer and mixed into the second liquid are mostly aluminum. This makes it possible to reduce additional mixture of impurities other than originally-contained aluminum, into the second liquid flowing through the pipe.

According to the trichlorosilane production method in accordance with an aspect of the present invention, the ceramic layer may have a thickness of not less than 1 mm and less than 5 mm. With the above configuration, in which the thickness of the ceramic layer is not less than 1 mm, it is possible to reduce generation, on the inner surface of the side wall, of a place where a ceramic layer is not formed (hereinafter, referred to as "unevenness of formation"). Specifically, it is possible to reduce the occurrence of a problem of the generation of unevenness of formation after formation of the ceramic layer is completed, the problem being caused by, for example, difficulties in the formation due to an extremely small thickness of the ceramic layer to be formed.

Further, in a case where the ceramic layer is formed on the inner surface of the side wall of the pipe, the diameter of a circle that is formed by the contacting surface of the ceramic layer in the plan view of the pipe is preferably substantially equal to the inner diameter of a conventional pipe that does not include a ceramic layer. In a case where the thickness of the ceramic layer is not less than 5 mm, in order that the diameter of the circle is substantially equal to the inner diameter of a conventional pipe, it is necessary to significantly increase the diameter of a circle that is formed by the inner surface of the side wall in a plan view of the pipe in accordance with the present invention. This results in the pipe in accordance with the present invention that is larger than required, and therefore increases costs.

In contrast, the above configuration, in which the thickness of the ceramic layer is less than 5 mm, prevents the diameter of the circle that is formed by the inner surface of the side wall in the plan view of the pipe in accordance with the present invention from becoming too large, and therefore reduces the cost increase due to the pipe being made larger.

According to the trichlorosilane production method in accordance with an aspect of the present invention, the raw material gas may be a first raw material gas containing hydrogen chloride or a second raw material gas containing hydrogen and silicon tetrachloride. With the above configuration, it is possible to efficiently form trichlorosilane through a reaction between metal silicon and the first raw material gas containing hydrogen chloride or a reaction between metal silicon and the second raw material gas containing hydrogen and silicon tetrachloride. In a case where the second liquid containing trichlorosilane having been thus efficiently formed is caused to flow the pipe, it is possible to reduce erosion, caused by the deposition of aluminum chloride originally contained in the second liquid, of the inner surface of the side wall.

A pipe in accordance with an aspect of the present invention is for use in flow of a second liquid containing trichlorosilane, the second liquid having been discharged from a distillation device for distilling a first liquid containing the trichlorosilane formed through a reaction between metal silicon containing aluminum in a concentration of not less than 0.10 mass% and a raw material gas containing a chloride, the pipe being for use under a condition where the second liquid recovered from the distillation device contains aluminum chloride in a molar concentration higher than a molar concentration of the aluminum contained in the metal silicon, the pipe having a side wall of which an inner surface is covered with a ceramic layer.

With the above configuration, it is possible to provide a pipe in which erosion, caused by deposition of aluminum chloride originally contained in the second liquid, of the inner surface of the side wall is reduced.

### [Supplementary notes]

The present invention is not limited to the embodiment and variations, but can be variously altered by a skilled person in the art within the scope of the claims. For example, the present invention also encompasses, in its technical scope, any embodiment derived by appropriately combining technical means disclosed in the embodiment and the differing variations.

### [Example 1]

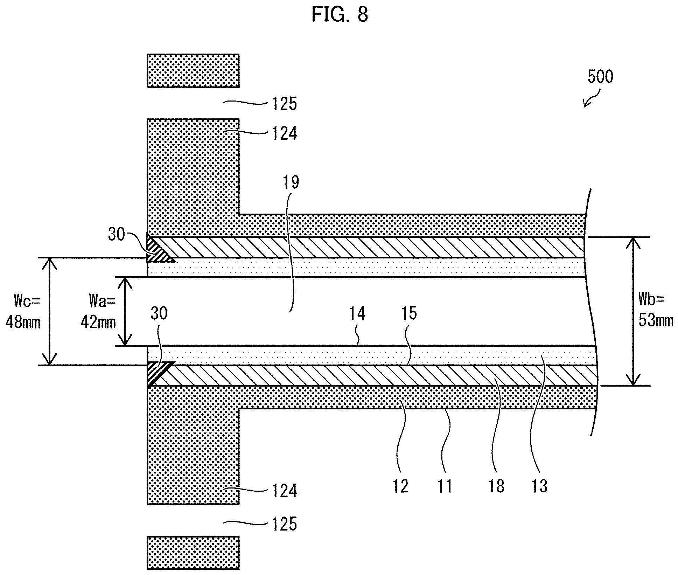

The following description will discuss Example 1 of the present invention with reference to Fig. 8. In Example 1, used as the metal silicon 6 for use in forming trichlorosilane in the reaction step (S1) was metal silicon containing aluminum in a concentration of 0.15 mol%, which is converted to 0.145 mass% in terms of the mass percentage. As the raw material gas 7 for use in forming trichlorosilane in the reaction step (S1), a raw material gas containing hydrogen chloride in a concentration of 100 mol% (100 mass%) was used. The distillation was carried out at 80°C.

In Example 1, used as the second pipe 100 for use in the distillation step (S3) was a second pipe 500, illustrated in Fig. 8, having an inner diameter Wa of 42 mm. The second pipe 500 was made by bonding, as a ceramic layer 13, an alumina sleeve tube having an inner diameter Wa of 42 mm and a thickness of 3 mm to an inner surface 15 of a metal pipe 11 made of SUS and having an inner diameter of Wb of 53 mm. For the bonding, a heat-resistant adhesive 18 made from epoxy was used.

The second pipe 500 was provided, at one of the end thereof, with a flange 124 made of SUS and protruding outward from the outer surface of the metal pipe 11. Flange 124 had a plurality of bolt holes 125 for connecting the second pipe 500 to another pipe or the like. Further, putty 30, made of alumina, for protecting a layer of the heat-resistant adhesive 18 was applied to an edge located at the same end of the second pipe 500 as the flange 124 was formed. Specifically, the putty 30 was applied to a portion of the edge surrounding a circle of which the center was on the central axis (not illustrated) of the second pipe 500 and which had a diameter Wc of 48 mm.

The metal silicon, the raw material gas, and the second pipe 500 described above were used for carrying out the reaction step (S1), the condensate formation step (S2), and the distillation step (S3). As a result, in the distillation column 4, the condensate 8 was distilled so that the aluminum and the unreacted metal silicon powder in the condensate 8 each became approximately five times stronger. Further, the concentration of the aluminum in the discharge liquid 10 flowing through the inner space 19 of the second pipe 500 became 0.96 mol%. In addition, a component ratio of the trichlorosilane to the silicon tetrachloride in the discharge liquid 10 became Trichlorosilane:Silicon tetrachloride = 5:95 = 1:19 on a mole basis. The unreacted metal silicon powder was contained in a concentration of 220 ppmwt and had an average particle diameter of 0.7 µm.

In a case where a conventional pipe having a side wall of which the inner surface was not covered with the ceramic layer 13 was used for producing trichlorosilane, three-month operation caused the pipe to have partial erosion, which resulted in liquid leakage. In contrast, as a result of using the second pipe 500 in accordance with Example 1 to produce trichlorosilane, one-year operation was stably achieved. Further, as a result of opening and checking the second pipe 500 after the one-year operation, it was found that aluminum chloride was deposited little on the contacting surface 14 of the ceramic layer 13, even in the downstream part of the second pipe 500, which is a part in which the inner surface 15 of the side wall 12 has a temperature that decreases to 70°C or lower.

### [Example 2]

The following description will discuss Example 2 of the present invention. In Example 2, as the second pipe 500 used in Example 1, used was a second pipe (not illustrated) having a structure in which a space was formed inside the side wall 12. Operation was carried out while the inner surface 15 of the side wall 12 was kept at 130°C by passing steam through the above-described space as a heat medium. Except these points, Example 2 was carried out as in Example 1.

As a result of using the second pipe in accordance with Example 2 to produce trichlorosilane, this pipe was capable of being used stably for one year. Further, as a result of opening and checking a second pipe 600 after the one-year use, it was found that aluminum chloride was not deposited on the contacting surface 14 (see Fig. 8) of the ceramic layer 13 throughout the second pipe.

### Reference Signs List

- 4:: Distillation column (distillation device)
- 6:: Metal silicon
- 7:: Raw material gas (first raw material gas)
- 8:: Condensate (first liquid)
- 10:: Discharge liquid (second liquid)
- 12:: Side wall
- 13:: Ceramic layer
- 14:: Contacting surface
- 15:: Inner surface
- 16:: Space
- 17:: Heat-retaining layer
- 19:: Inner space (inside of pipe)
- 20:: Air (heat medium)
- 123:: Outer surface
- 100, 200, 300, 400, 500:: Second pipe (pipe)

## Claims

1. A trichlorosilane production method comprising a distillation step of distilling, by using a distillation device, a first liquid containing trichlorosilane formed through a reaction between metal silicon containing aluminum in a concentration of not less than 0.10 mass% and a raw material gas containing a chloride,
- the trichlorosilane production method including recovering a second liquid containing the trichlorosilane from the distillation device, the second liquid containing aluminum chloride in a molar concentration higher than a molar concentration of the aluminum contained in the metal silicon,
- the distillation step including recovering the second liquid from the distillation device by causing the second liquid discharged from the distillation device to flow through an inside of a pipe having a side wall of which an inner surface is covered with a ceramic layer.

2. The trichlorosilane production method according to claim 1, wherein the ceramic layer has a contacting surface that comes into contact with the second liquid and that is set to a temperature of not less than 100°C.

3. The trichlorosilane production method according to claim 2, wherein a space for a heat medium to flow through is formed inside the side wall, and
- the contacting surface has a temperature that is set to be not less than 100°C by causing the heat medium to flow through the space.

4. The trichlorosilane production method according to any one of claims 1 to 3, wherein the side wall has an outer surface that is covered with a heat-retaining layer for keeping, at a temperature of not less than 100°C, the contacting surface at which the ceramic layer comes into contact with the second liquid.

5. The trichlorosilane production method according to any one of claims 1 to 4, wherein the ceramic layer contains alumina.

6. The trichlorosilane production method according to any one of claims 1 to 5, wherein the ceramic layer has a thickness of not less than 1 mm and less than 5 mm.

7. The trichlorosilane production method according to any one of claims 1 to 6, wherein the raw material gas is a first raw material gas containing hydrogen chloride or a second raw material gas containing hydrogen and silicon tetrachloride.

8. A pipe for use in flow of a second liquid containing trichlorosilane, the second liquid having been discharged from a distillation device for distilling a first liquid containing the trichlorosilane formed through a reaction between metal silicon containing aluminum in a concentration of not less than 0.10 mass% and a raw material gas containing a chloride,
- the pipe being for use under a condition where the second liquid recovered from the distillation device contains aluminum chloride in a molar concentration higher than a molar concentration of the aluminum contained in the metal silicon,
- the pipe having a side wall of which an inner surface is covered with a ceramic layer.
